Europäisches Patentamt

European Patent Office

Office européen des brevets

(19)

(11) Numéro de publication: **0 213 031 B1**

# FASCICULE DE BREVET EUROPEEN

(12)

(45) Date de publication de fascicule du brevet:
17.07.91

(51) Int. Cl.5: **G01N 15/06**, G01N 1/22,
B01D 47/02

(21) Numéro de dépôt: **86401740.5**

(22) Date de dépôt: **04.08.86**

(54) Procédé et dispositif pour la mesure en continu en fonction du temps de la concentration d'aérosols dans un gaz.

(30) Priorité: **07.08.85 FR 8512086**

(43) Date de publication de la demande:
**04.03.87 Bulletin 87/10**

(45) Mention de la délivrance du brevet:
**17.07.91 Bulletin 91/29**

(84) Etats contractants désignés:
**BE DE GB IT**

(56) Documents cités:
**DE-A- 3 440 730**
**FR-A- 1 428 714**
**GB-A- 1 512 002**
**US-A- 3 061 993**
**US-A- 3 827 216**

(73) Titulaire: **COMMISSARIAT A L'ENERGIE ATO-
MIQUE Etablissement de Caractère Scientifique Technique et Industriel
31/33, rue de la Fédération
F-75015 Paris(FR)**

(72) Inventeur: **Delmont, Didier
3, Square des Troenes
F-91070 Bondoufle(FR)**

(74) Mandataire: **Mongrédien, André et al
c/o BREVATOME 25, rue de Ponthieu
F-75008 Paris(FR)**

## Description

La présente invention a pour objets un procédé et un dispositif pour la mesure en continu en fonction du temps de la concentration d'aérosols dans un gaz.

Cette mesure peut notamment être mise en oeuvre dans des appareils de contrôle atmosphérique à alarme pour tout aérosol pouvant être mis en solution dans un liquide.

Ce genre d'appareil est utilisé pour le contrôle d'atmosphère dans les industries nucléaire, minière, métallurgique, chimique, par exemple.

Selon un procédé de l'art antérieur le plus proche décrit dans le document GB-A-1512002, l'atmosphère chargée d'aérosols à contrôler est prélevée en continu et l'on fait barboter ce prélèvement à l'intérieur d'un liquide choisi de nature appropriée en fonction de celle des aérosols. Les aérosols prélevés et ainsi mis en barbotage dans ce liquide y sont mis en solution et l'on peut analyser alors en continu cette solution selon tout processus de mesure connu.

Toutefois, ce procédé antérieurement connu a des performances qui sont limitées par la valeur faible du débit de prélèvement que l'on ne peut accroître au-dessus d'une certaine valeur sans avoir des projections de liquide. Dans ces conditions, la représentativité de la mesure effectuée de la concentration en aérosols reste médiocre.

L'invention est relative à ce genre de procédé dans lequel on met en solution des aérosols dans un liquide approprié et a pour but d'améliorer les performances de ce genre de procédé en améliorant les conditions de mise en solution des aérosols dans le liquide.

A cet effet, l'invention a pour premier objet un procédé pour la mesure en continu en fonction du temps de la concentration d'aérosols dans un gaz, dans lequel on met en solution les aérosols contenus dans un prélèvement du gaz dans un liquide approprié, puis on analyse cette solution. Selon l'invention, on enferme le liquide de mise en solution des aérosols dans une enceinte fermée et on projette le prélèvement de gaz à contrôler pour que les aérosols viennent frapper la surface du liquide et se mettre en solution avec un rendement accru, et on évacue le prélèvement de gaz après mise en solution des aérosols.

Si on utilise un appareil d'analyse tel qu'un spectromètre d'absorption atomique, on prélève une fraction de la solution contenue dans l'enceinte pour analyse et on injecte une quantité équivalente du liquide de mise en solution dans l'enceinte.

L'invention a pour second objet un dispositif pour la mesure en continu en fonction du temps de la concentration d'aérosols dans un gaz, agencé pour maximiser la mise en solution des aérosols dans le liquide.

Selon la principale caractéristique de ce dispositif, celui-ci comprend :

- une enceinte fermée contenant un liquide de mise en solution des aérosols,
- une plaque de séparation du volume intérieur de l'enceinte, cette plaque étant ajustée aux parois de l'enceinte et se trouvant au contact du liquide,
- une canalisation d'introduction du gaz passant librement à travers une ouverture ménagée dans la plaque de séparation, cette ouverture étant calibrée de sorte que le flux gazeux sortant ne perturbe pas le flux induit, et
- une canalisation de sortie du gaz.

De la sorte, lorsque le gaz à contrôler est prélevé et mis en circulation forcée à l'intérieur de la canalisation d'introduction, il se forme une cavité stable pratiquement fermée au-dessous de la plaque de séparation et en-dessous de l'extrémité de la canalisation d'introduction du prélèvement de gaz ; le flux soufflé de gaz frappe directement le fond de cette cavité en mettant en solution des premiers aérosols tandis qu'un flux induit par le flux soufflé lèche les parois de la cavité et permet la mise en solution d'aérosols supplémentaires et réinjecte dans le flux soufflé les aérosols qui n'ont pas été captés : on accroît ainsi le rendement du procédé.

Dans un mode particulier de réalisation, l'enceinte a la forme d'un cylindre droit fermé par un couvercle. Quant à la plaque de séparation, elle est de préférence réalisée sous la forme d'un flotteur.

Eventuellement, l'enceinte peut être équipée d'une canalisation d'introduction du liquide de mise en solution des aérosols et d'une canalisation de sortie de ce liquide. Elle peut également être équipée d'une cellule à lames parallèles.

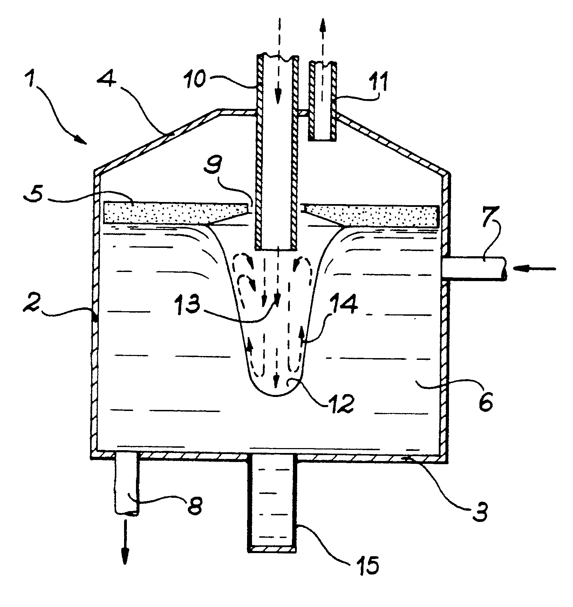

L'invention sera mieux comprise à l'aide d'un exemple particulier de mise en oeuvre que l'on va maintenant décrire. On se référera à la figure unique du dessin annexé qui représente schématiquement en coupe verticale l'organisation fonctionnelle d'un dispositif selon l'invention.

Ce dispositif comprend une cuve cylindrique droite 1 à parois verticales 2 et fermée par un fond 3 et un couvercle 4.

Le volume intérieur de la cuve 1 est séparé par une plaque horizontale de séparation 5, placée vers le haut de la cuve, et ajustée aux parois verticales 2 de la cuve. Cette plaque vient au contact du liquide de mise en solution 6. Pour compenser 1 variation du niveau du liquide lors de la mise en route, la plaque 5 est réalisée, comme représenté, sous forme d'un flotteur pouvant coulisser à l'intérieur du cylindre de la cuve 1. La plaque 5 est percée en son centre d'un orifice 9 à l'intérieur duquel est introduite librement l'extrémité inférieure d'une canalisation d'introduction 10 du prélèvement de gaz contenant des aérosols dont on désire mesurer en continu la concentration. Le couvercle 4 est équipé d'une canalisation d'évacuation 11 du gaz après mise en solution des aérosols.

La figure illustre très clairement le phénomène mis en oeuvre par application du procédé de l'invention qui consiste essentiellement à projeter avec impact les aérosols contenus dans un gaz à contrôler sur la surface d'un liquide de mise en solution de ces aérosols.

Selon la réalisation particulière décrite, cette surface d'intéraction entre un flux de gaz et le liquide est d'une valeur accrue grâce à la cavité de convection qui se crée lors du fonctionnement du dispositif.

En effet, à condition d'ajuster correctement le débit du gaz dans la canalisation 10 en fonction de la géométrie du dispositif et de la nature du liquide de mise en solution, un flux soufflé direct dans l'axe de la canalisation 10 forme une cavité 12 à l'intérieur du liquide 6. Outre ce flux soufflé direct 13, il se forme un flux induit 14, comme le montrent les flèches sur la figure. Cela permet d'accroître maximalement la mise en solution dans le liquide des aérosols contenus dans le gaz.

Le liquide de mise en solution est choisi en fonction de la nature des aérosols que l'on veut analyser. A titre d'exemple, on prendra de l'acide chlorhydrique pour des aérosols de béryllium et une solution ammoniacale pour des aérosols d'uranine (fluorescéine sodée). Il suffit alors d'analyser en continu la solution. A titre d'exemple, on peut utiliser pour cette analyse un spectromètre d'absorption atomique pour le béryllium.

Dans ce cas, on prélève une fraction de la solution (de l'ordre de quelques microlitres) par la canalisation 8 et on injecte une quantité équivalente de liquide par la canalisation 7. Dans le cas de l'uranine, on peut utiliser un fluorimètre : on remplace alors les canalisations 7 et 8 par une cellule à lames parallèles 15. Bien entendu, on ne sortirait pas du cadre de l'invention en utilisant une enceinte équipée simultanément des canalisations 7 et 8 et de la cellule 15.

Compte tenu du principe de mise en solution par impacts selon l'invention, on ne capte que les aérosols de diamètre aérodynamique supérieur à un diamètre déterminé par les dimensions de l'appareil et le débit du gaz à contrôler.

Un appareil réalisé permet de capter avec un bon rendement les aérosols dont le diamètre aérodynamique est supérieur 1 μm et ceci avec un débit de 1,4 m$^3$h$^{-1}$. Dans cet exemple, le volume de liquide contenu dans la cuve est de l'ordre de 125 ml. Le diamètre intérieur du tube 10 est de 6,35 mm.

Les procédé et dispositif selon l'invention permettent, outre la possibilité de suivre de façon continue l'évolution dans le temps de la concentration d'un gaz en aérosols, d'avoir des débits assez importants (plus que dans des procédés à barbotage) et donc d'obtenir une meilleure représentativité du prélèvement par rapport à une atmosphère à contrôler. Il devient ainsi possible de concevoir des appareils fiables de contrôle d'atmosphère à alarme.

## Revendications

1. Procédé pour la mesure en continu en fonction du temps de la concentration d'aérosols dans un gaz, dans lequel on met en solution les aérosols contenus dans un prélèvement du gaz dans un liquide approprié puis on analyse cette solution, caractérisé en ce que l'on enferme le liquide (6) de mise en solution des aérosols dans une enceinte fermée (1) et que l'on projette le prélèvement de gaz à contrôler pour que les aérosols viennent frapper la surface du liquide et se mettre en solution avec un rendement accru, et que l'on évacue le prélèvement de gaz après mise en solution des aérosols.

2. Procédé selon la revendication 1, caractérisé en ce qu'on prélève une fraction de la solution contenue dans l'enceinte (1) pour analyse et en ce qu'on injecte une quantité équivalente du liquide de mise en solution dans l'enceinte (1).

3. Dispositif pour la mesure en continu en fonction du temps de la concentration d'aérosols dans un gaz, agencé pour maximiser la mise en solution des aérosols dans le liquide, caractérisé en ce qu'il comprend :
   - une enceinte (1) fermée contenant un liquide (6) de mise en solution des aérosols,
   - une plaque (5) de séparation du volume intérieur de l'enceinte (1), cette plaque (5) étant ajustée aux parois de l'enceinte (1) et se trouvant au contact du liquide,
   - une canalisation (10) d'introduction du gaz passant librement à travers une ouverture (9) ménagée dans la plaque (5) de séparation afin que les aérosols dudit gaz viennent frapper la surface du liquide, cette ouverture (9) étant calibrée de sorte que le flux gazeux sortant ne perturbe pas le flux induit (14), et
   - une canalisation (11) de sortie du gaz.

4. Dispositif selon la revendication 3, caractérisé en ce que ladite enceinte (1) est constituée par un cylindre droit (2) fermé par un fond (3) et un couvercle (4).

5. Dispositif selon l'une quelconque des revendications 3 et 4, caractérisé en ce que la plaque (5) de séparation est réalisée sous la forme d'un flotteur.

6. Dispositif selon l'une quelconque des revendications 3 à 5, caractérisé en ce que l'enceinte fermée est équipée d'une canalisation (7) d'introduction du liquide (6) de mise en solution des aérosols et d'une canalisation (8) de sortie de ce liquide.

7. Dispositif selon l'une quelconque des revendications 3 à 6, caractérisé en ce que l'enceinte (1) fermée est équipée d'une cellule (15) à lames parallèles.

## Claims

1. Method for the continuous measurement as a function of time of the concentration of aerosols in a gas, in which the aerosols contained in a sample of the gas are dissolved in an appropriate liquid and this solution is then analysed, characterised in that the liquid (6) for dissolving the aerosols is enclosed in a closed chamber (1), and in that the sample of gas to be examined is sprayed so that the aerosols strike the surface of the liquid and dissolve with an increased efficiency, and in that the sample of gas is discharged after the aerosols have dissolved.

2. Method according to Claim 1, characterised in that a fraction of the solution contained in the chamber (1) is sampled for analysis, and in that an equivalent quantity of the liquid for dissolving is injected into the chamber (1).

3. Device for the continuous measurement as a function of time of the concentration of aerosols in a gas, designed in order to maximise the dissolving of the aerosols in the liquid, characterised in that it comprises:
   - a closed chamber (1) containing a liquid (6) for dissolving the aerosols,
   - a plate (5) for separating the internal volume of the chamber (1), this plate (5) being matched to the walls of the chamber (1) and being situated in contact with the liquid,
   - a duct (10) for introducing the gas, passing freely through an opening (9) formed in the separating plate (5) so that the aerosols of the said gas strike the surface of the liquid, this opening (9) being calibrated in such a way that the emerging gaseous flow does not disturb the induced flow (14), and
   - a duct (11) for the outlet of the gas.

4. Device according to Claim 3, characterised in that the said chamber (1) consists of a right circular cylinder (2) closed by a base (3) and a lid (4).

5. Device according to either of Claims 3 and 4, characterised in that the separating plate (5) is made in the form of a float.

6. Device according to any one of Claims 3 to 5, characterised in that the closed chamber is equipped with a duct (7) for introducing the liquid (6) for dissolving the aerosols, and with a duct (8) for the outlet of this liquid.

7. Device according to any one of Claims 3 to 6, characterised in that the closed chamber (1) is equipped with a parallel-plate cell (15).

## Patentansprüche

1. Verfahren zur durchgehenden Messung der Aerosolteilchenkonzentration in einem Gas als Funktion der Zeit, bei dem man die Aerosolteilchen, die in einer Gasprobe enthalten sind, in eine geeignete Flüssigkeit löst und dann diese Lösung analysiert, dadurch gekennzeichnet, daß man die Flüssigkeit (6) zum Inlösungbringen der Aerosolteilchen in eine geschlossene Hülle (1) bringt und daß man die zu untersuchende Gasprobe herausschleudert, damit die Aerosolteilchen auf die Flüssigkeitsoberfläche schlagen und mit einer erhöhten Ausbeute in Lösung gehen, und daß man die Gasprobe nach dem Inlösungbringen der Aerosolteilchen entleert.

2. Verfahren nach Anspruch 1, dadurch gekennzeichnet, daß man einen Teil der in der Hülle (1) enthaltenen Lösung zur Analyse entnimmt und daß man eine äquivalente Menge der Flüssigkeit für das Inlösungbringen in die Hülle (1) einbringt.

3. Vorrichtung zum durchgehenden Messen der Konzentration von Aerosolteilchen in einem Gas als Funktion der Zeit, die so aufgebaut ist, daß das Inlösungbringen der Aerosolteilchen in der Flüssigkeit maximiert wird, dadurch gekennzeichnet, daß sie umfaßt:
   - eine geschlossenen Hülle (1), die eine Flüssigkeit (6) zum Inlösungbringen der Aerosolteilchen enthält,

- eine Trennplatte (5) für das Innenvolumen der Hülle (1), wobei diese Platte (5) an den Wänden der Hülle (1) ausgerichtet ist und sich in Kontakt mit der Flüssigkeit befindet,
- eine Gaseinlaßkanalisierung (10), die frei durch eine in der Trennplatte (5) ausgeführte Öffnung (9) geht, damit die Areosolteilchen des Gases auf die Flüssigkeitsoberfläche schlagen, wobei diese Öffnung (9) so bemessen ist, daß der herausströmende Gasfluß nicht den eingeleiteten Gasfluß (14) stört, und
- eine Gasauslaßkanalisierung (11).

4. Vorrichtung nach Anspruch 3, dadurch gekennzeichnet, daß die Hülle (1) aus einem aufrechtem Zylinder (2) besteht, der durch einen Boden (3) und einen Deckel (4) verschlossen ist.

5. Vorrichtung nach einem der Ansprüche 3 und 4, dadurch gekennzeichnet, daß die Trennplatte in der Form eines Schwimmkörpers ausgebildet ist.

6. Vorrichtung nach einem der Ansprüche 3 bis 5, dadurch gekennzeichnet, daß die geschlossene Hülle mit einer Einführkanalisation (7) für Flüssigkeit (6) zum Inlösungbringen der Aerosolteilchen und einer Ausführkanalisation (8) für diese Flüssigkeit versehen ist.

7. Vorrichtung nach einem der Ansprüche 3 bis 6, dadurch gekennzeichnet, daß die geschlossene Hülle mit einer Zelle (15) mit parallelen Lamellen ausgestattet ist.